# FASCICULE DE BREVET EUROPEEN

(11) **EP 3 318 853 B1**
(45) Date de publication et mention de la délivrance du brevet: **08.05.2024**
(21) Numéro de dépôt: 17199519.4
(22) Date de dépôt: 01.11.2017
(51) Int. Cl.: G01J 3/28, G01J 3/36

(54) **DISPOSITIF DE DETECTION MULTISPECTRALE AMELIORE**
VERBESSERTE MULTISPEKTRALE DETEKTIONSVORRICHTUNG
IMPROVED MULTI-SPECTRUM DETECTION DEVICE

(30) Priorité: 03.11.2016 FR 1660655
(43) Date de publication de la demande: 09.05.2018
(73) Titulaire: LYNRED, 91120 Palaiseau (FR)
(72) Inventeur: BAUD, Laurent, 38690 Bevenais (FR); MALTERE, Alexandre, 38120 Saint-Egrève (FR)
(74) Mandataire: Talbot, Alexandre

(56) Documents cités:
- EP-A1- 0 519 105
- EP-A1- 2 863 192
- EP-B1- 2 302 905
- US-A- 4 227 808
- US-A1- 2011 260 629
- US-A1- 2013 020 472
- US-B1- 6 803 555

## Description

### Domaine technique de l'invention

L'invention est relative à un dispositif de détection électromagnétique.

L'invention est également relative à un procédé de gestion d'un dispositif de détection électromagnétique.

### État de la technique

Dans le domaine des dispositifs de détection, afin de capter un maximum d'information sur une scène en cours d'observation, il est avantageux d'utiliser plusieurs bandes spectrales différentes.

Plusieurs détecteurs sont utilisés et ils sont associés à des bandes spectrales différentes. De cette manière, chaque détecteur vient capter une information spécifique de la scène observée dans sa bande spectrale ce qui permet de faciliter l'analyse en croisant les différentes données.

Une manière simple de réaliser un tel dispositif de détection est d'associer plusieurs photodétecteurs qui sont configurés pour détecter une bande spectrale spécifique. Chaque photodétecteur est associé à un circuit de lecture qui va stocker les charges électriques représentatives de l'information reçue.

L'information électrique générée est ensuite envoyée à un circuit de traitement qui analyse les différentes données pour fournir une information exploitable par l'utilisateur. Dans un tel circuit, chaque photodétecteur est associé à un circuit de lecture et chaque circuit de lecture est associé à un circuit de traitement. Un circuit de traitement peut être associé à plusieurs circuits de lecture.

Il s'avère que ces dispositifs de détection sont difficiles à utiliser car ils sont généralement configurés pour des dynamiques précises d'illuminations dans la première bande spectrale et dans la deuxième bande spectrale. Il apparaît alors que les dispositifs de détection fonctionnent régulièrement dans des conditions défavorables.

EP2302905B1 divulgue un dispositif d'imagerie CMOS apte à moduler la durée d'exposition de l'ensemble des pixels dans une même trame.

### Objet de l'invention

L'invention a comme objet de fournir un dispositif de détection qui peut être utilisé dans des conditions d'illumination plus variées, le dispositif étant défini par la revendication 1.

Le dispositif de détection comporte au moins:
- un premier photodétecteur sensible à une première longueur d'onde,
- un deuxième photodétecteur sensible à une deuxième longueur d'onde,
- un premier circuit de lecture muni d'un premier condensateur d'intégration connecté au premier photodétecteur de manière à stocker les charges électriques émises par le premier photodétecteur,
- un deuxième circuit de lecture muni d'un deuxième condensateur d'intégration connecté au deuxième photodétecteur de manière à stocker les charges électriques émises par le deuxième photodétecteur,
- des premier et deuxième circuits de remise à zéro configurés de manière à remettre à zéro respectivement le premier condensateur d'intégration et le deuxième condensateur d'intégration,
- un générateur de signal de synchronisation,
- un générateur de signal d'horloge,
- un premier circuit de synchronisation connecté au premier circuit de lecture, au générateur de signal de synchronisation et au générateur de signal d'horloge, le premier circuit de synchronisation étant configuré de manière à
   ∘ définir une trame au moyen de la détection d'un premier motif prédéfini du signal de synchronisation,
   ∘ compter le nombre d'occurrences d'un deuxième motif prédéfini dans le signal d'horloge,
   ∘ initier ou arrêter une phase d'acquisition de donnée à l'intérieur de la trame lorsque le nombre d'occurrences d'un deuxième motif prédéfini dans le signal d'horloge est égal à une première valeur seuil enregistrée dans un registre du premier circuit de synchronisation.

Un deuxième circuit de synchronisation est connecté au deuxième circuit de lecture, au générateur de signal de synchronisation et au générateur de signal d'horloge. Le deuxième circuit de synchronisation est configuré de manière à :
∘ définir la trame au moyen de la détection du premier motif prédéfini du signal de synchronisation,
∘ compter le nombre d'occurrences d'un quatrième motif prédéfini dans le signal d'horloge,
∘ initier ou arrêter une phase d'acquisition de donnée à l'intérieur de la trame lorsque le nombre d'occurrences du quatrième motif prédéfini dans le signal d'horloge est égal à une deuxième valeur seuil enregistrée dans un registre du deuxième circuit de synchronisation.

Le deuxième motif prédéfini est différent du quatrième motif prédéfini et/ou la première valeur seuil est différente de la deuxième valeur seuil pour que la durée intégration du premier photodétecteur soit différente de la durée d'intégration du deuxième photodétecteur.

Dans un mode de réalisation particulier, le quatrième motif prédéfini est identique au deuxième motif prédéfini.

Dans un mode de réalisation préférentiel, le premier circuit de synchronisation est configuré de manière à initier le comptage du nombre d'occurrences du deuxième motif prédéfini après la détection d'un troisième motif prédéfini dans le signal de synchronisation.

Dans un autre mode de réalisation, le premier circuit de synchronisation est configuré de manière à initier ou terminer la phase d'acquisition après la détection d'un cinquième motif prédéfini dans le signal de synchronisation.

Dans une autre variante de réalisation, le premier circuit de lecture est configuré pour réaliser la remise à zéro du premier condensateur d'intégration pendant que le premier photodétecteur est connecté au premier condensateur d'intégration et en ce que le premier circuit de synchronisation est configuré de manière à initier la phase d'acquisition en arrêtant la phase de remise à zéro.

Il est encore possible de prévoir que le premier motif prédéfini est un front montant et que le troisième motif prédéfini est un front descendant. En variante, il est possible de prévoir que le premier motif prédéfini est un front descendant et que le troisième motif prédéfini est un front montant.

Dans un mode de réalisation particulier, le deuxième motif prédéfini est un front descendant ou un front montant.

Dans un cas particulier de réalisation, le dispositif comporte une pluralité de premiers photodétecteurs connectés à une pluralité de premiers circuits de lecture et une pluralité de deuxièmes photodétecteurs connectés à une pluralité de deuxièmes circuits de lecture, la pluralité de premiers circuits de lecture est connectée au premier circuit de synchronisation.

Il est encore possible de prévoir que la pluralité de deuxièmes circuits de lecture est connectée au deuxième circuit de synchronisation.

L'invention a également comme objet de réaliser un procédé de gestion d'un dispositif de détection selon la revendication 17.

Le procédé de gestion d'un dispositif de détection comporte les étapes suivantes :
- prévoir le dispositif de détection comportant au moins:
   ∘ un premier photodétecteur sensible à une première longueur d'onde,
   ∘ un deuxième photodétecteur sensible à une deuxième longueur d'onde,
   ∘ un premier circuit de lecture muni d'un premier condensateur d'intégration connecté au premier photodétecteur de manière à stocker les charges électriques émises par le premier photodétecteur,
   ∘ un deuxième circuit de lecture muni d'un deuxième condensateur d'intégration connecté au deuxième photodétecteur de manière à stocker les charges électriques émises par le deuxième photodétecteur,
   ∘ des premier et deuxième circuits de remise à zéro configurés de manière à remettre à zéro respectivement le premier condensateur d'intégration et le deuxième condensateur d'intégration,
- détecter un premier motif prédéfini dans un signal de synchronisation pour initier une trame pour les premier et deuxième circuits de lecture,
- compter le nombre d'occurrences d'un deuxième motif prédéfini dans un signal d'horloge,
- comparer ledit nombre d'occurrences par rapport à une valeur seuil, lorsque le nombre d'occurrences atteint la valeur seuil, le premier circuit de lecture initie ou arrête une phase de remise à zéro du premier condensateur d'intégration ou une phase d'acquisition de donnée.
- comparer ledit nombre d'occurrences du quatrième motif prédéfini par rapport à une deuxième valeur seuil, lorsque le nombre d'occurrences atteint la deuxième valeur seuil, le deuxième circuit de lecture initie ou arrête une phase de remise à zéro du deuxième condensateur d'intégration (3b) ou une phase d'acquisition de données.

Le procédé est remarquable en ce que le deuxième motif prédéfini est différent du quatrième motif prédéfini et/ou la première valeur seuil est différente de la deuxième valeur seuil pour que la durée intégration du premier photodétecteur soit différente de la durée d'intégration du deuxième photodétecteur.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente, de manière schématique, un mode de réalisation d'un dispositif de détection muni de deux photodétecteurs,
- les figures 2a-2e représentent des chronogrammes représentatifs de différentes phases d'un premier mode de fonctionnement du dispositif de détection, pour certains éléments constitutifs,
- les figures 3a-3e représentent des chronogrammes représentatifs de différentes phases d'un deuxième mode de fonctionnement du dispositif de détection, pour certains éléments constitutifs,
- la figure 4 représente, de manière schématique, un mode de réalisation d'un dispositif de détection muni de plusieurs photodétecteurs.

### Description détaillée

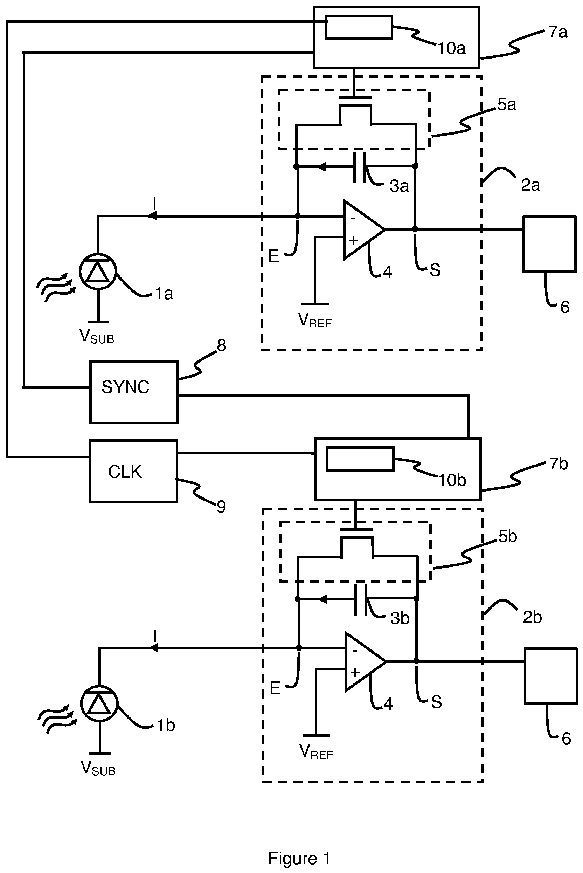

La figure 1 illustre un dispositif de détection électromagnétique qui comporte au moins un premier photodétecteur 1a sensible à une première gamme de longueur d'onde également appelée première bande spectrale et un deuxième photodétecteur 1b sensible à une deuxième gamme de longueur d'onde également appelée deuxième bande spectrale.

Dans un mode de réalisation particulier, la deuxième gamme de longueur d'onde peut être identique à la première gamme de longueur d'onde. Dans une variante de réalisation, la deuxième gamme de longueur d'onde est différente de la première gamme de longueur d'onde, de préférence sans chevauchement dans les gammes de longueur d'onde.

Le dispositif de détection peut être configuré pour détecter des signaux électromagnétiques dans une pluralité de bandes spectrales, par exemple N bandes spectrales avec N entier supérieur ou égal à 2. Le dispositif de détection peut donc comporter au moins N photodétecteurs différents et configurés pour détecter des signaux dans N bandes spectrales différentes.

Le premier et le deuxième photodétecteurs 1a et 1b peuvent être formés par tous types de détecteurs adaptés, par exemple par une photodiode, un détecteur à puits quantique ou un détecteur à multipuits quantiques. D'autres types de photodétecteurs sont également possibles. Les premier et deuxième photodétecteurs 1a et 1b peuvent être réalisés dans des architectures identiques ou différentes. Les conditions d'alimentation des photodétecteurs 1a et 1b peuvent être différentes. Il est donc possible d'avoir des tensions V_{SUB} différentes. Les tensions sont représentées identiques sur le mode de réalisation illustré à la figure 1.

Le premier photodétecteur 1a est couplé électriquement à une entrée E d'un premier circuit de lecture 2a. Le deuxième photodétecteur 1b est couplé électriquement à une entrée E d'un deuxième circuit de lecture 2b qui est distinct du premier circuit de lecture 2a. Les circuits de lecture 2a et 2b sont configurés pour transformer une information en courant émise par les photodétecteurs 1a et 1b en une information en tension par exemple au moyen d'une charge qui est préférentiellement une charge capacitive 3.

Le circuit de lecture 2a, 2b peut être réalisé dans une architecture de type injection directe, injection directe contre-réactionnée, en source suiveuse ou « source follower » ou par un amplificateur transimpédance capacitif. Selon les architectures, la capacité d'intégration peut être en contact direct avec le détecteur, mais il est également possible d'avoir un couplage par l'intermédiaire d'un transistor comme par exemple dans une architecture à polarisation directe.

Dans un mode de réalisation illustré à la figure 1, le premier et le deuxième circuits de lecture 2a et 2b comportent chacun un condensateur d'intégration 3a, 3b qui est configuré pour stocker des charges électriques émises par le photodétecteur 1 associé. Dans l'exemple illustré à la figure 1, un montage avec amplificateur transimpédance capacitif est illustré. Le condensateur d'intégration 3 est monté en contre-réaction d'un amplificateur 4. Les conditions d'alimentation des circuits de lectures 2a et 2b peuvent être différentes. Dans l'exemple illustré à la figure 1, la même tension de référence V_{REF} est appliquée aux circuits de lectures 2a et 2b.

Le premier photodétecteur 1a est couplé électriquement à un premier condensateur électrique 3a. Le deuxième photodétecteur 1b est couplé électriquement à un deuxième condensateur électrique 3b qui est distinct du premier condensateur électrique 3a. Les deux condensateurs d'intégration 3a et 3b sont connectés aux deux photodétecteurs 1a et 1b de manière à stocker les charges électriques émises par leur photodétecteur 1 associé. Selon les modes de réalisation, le couplage entre le photodétecteur et le condensateur électrique peut être obtenu au moyen d'une connexion directe ou au moyen d'une connexion indirecte, par exemple au moyen d'un transistor de polarisation.

Chaque circuit de lecture 2 comporte avantageusement un circuit de remise à zéro 5 qui est configuré pour initialiser la charge, ici le condensateur d'intégration 3. La remise à zéro peut être réalisée en court-circuitant les deux électrodes du condensateur 3 ou en appliquant le même potentiel sur les deux électrodes. Dans un mode de réalisation particulièrement compact, la remise à zéro du condensateur 3 est réalisée au moyen d'un interrupteur qui court-circuite les deux électrodes du condensateur, par exemple au moyen d'un transistor.

Chaque circuit de lecture 2a et 2b est configuré pour définir au moins des première et deuxième configurations différentes. Les première et deuxième configurations comprennent une configuration d'acquisition où les charges électriques émises par le photodétecteur sont stockées dans la charge capacitive. Les première et deuxième configurations comprennent également une configuration de remise à zéro où la charge capacitive est placée dans un état prédéfini.

L'actionnement du circuit de lecture 2 permet de définir, dans une période de temps prédéfinie également appelée une trame, au moins une première phase d'acquisition de données et une deuxième phase de remise à zéro du condensateur d'intégration 3. Selon les modes de réalisation, dans une trame, la remise à zéro peut être réalisée avant l'acquisition ou après l'acquisition.

Lors d'une phase d'acquisition, les deux photodétecteurs 1a et 1b génèrent des charges électriques qui sont stockées dans leur condensateur d'intégration 3 associé. Les charges électriques émises par le photodétecteur 1 sont stockées dans le condensateur d'intégration 3 ce qui génère une différence de potentiel aux bornes du condensateur d'intégration 3. Cette différence de potentiel est ensuite mesurée et transmise à partir de la sortie S à un circuit de traitement 6. Le condensateur d'intégration 3 est initialisé pour permettre une nouvelle phase d'acquisition.

De manière avantageuse, le circuit de traitement 6 est commun aux circuits de lecture 2a et 2b. En variante, des circuits de traitement 6 différents peuvent être associés aux circuits de lecture 2a et 2b.

Il apparaît que la différence de potentiel est directement fonction de la quantité de charges électriques émise par le photodétecteur 1 et de la valeur de capacité électrique associée au condensateur 3. Il est donc important de définir la valeur du condensateur d'intégration 3 en fonction de la quantité de charges électriques qui doit être stockée par le condensateur 3 et de la gamme de tension qui doit être mesurée aux bornes du condensateur 3. Ces contraintes définissent la quantité de photons à détecter et d'une certaine manière la durée maximale de la phase d'acquisition car il faut éviter de saturer le condensateur d'intégration 3 en envoyant trop de charges électriques. Il est également avantageux de stocker un nombre suffisant de charges électriques afin de générer une différence de tension capable d'être mesurée. Intégrer un faible nombre de charges électrique rend plus difficile l'analyse du signal par rapport au niveau de bruit.

Le dispositif de détection est configuré de manière à pouvoir être utilisé pour différentes conditions d'illumination dans une ou dans différentes bandes spectrales. Les phases d'acquisition et de remise à zéro sont délimitées par une fenêtre d'acquisition également appelée trame. La fenêtre d'acquisition correspond à la durée maximale d'acquisition autorisée pour tous les photodétecteurs 1 et à la réinitialisation du circuit de lecture, ici des condensateurs 3. De manière générale, la quantité de photons détectées et collectées sous forme de charges électriques peut être maitrisée, à l'intérieur de la trame, au moyen de la durée maximale d'acquisition pour les deux circuits de lecture 2a et 2b.

Si la scène observée est très lumineuse, il est possible de travailler avec une trame courte, c'est-à-dire avec une vitesse de rafraichissement élevée. En revanche, si la scène observée est peu lumineuse, la trame doit être rallongée de manière à collecter une quantité plus importante de photons et donc de charges électrique. La modulation de la trame intervient sur le fonctionnement de tous les circuits de lecture 2. La trame est liée à la vitesse d'acquisition et de traitement des images.

En revanche, si une différence de flux existe entre les deux bandes spectrales différentes, il est avantageux de prévoir un dispositif d'ajustement complémentaire. Ce dispositif d'ajustement permet de moduler la durée d'intégration du premier photodétecteur 1a par rapport au deuxième photodétecteur 1b sans modifier la trame.

A titre d'exemple, dans une première condition, il est possible de détecter un fort flux dans la première bande spectrale et un faible flux dans la deuxième bande spectrale. Dans une deuxième condition, il est possible de détecter un fort flux dans la deuxième bande spectrale et un faible flux dans la première bande spectrale. Il est donc important de dissocier les conditions d'acquisition des différents photodétecteurs 1a et 1b afin de faire fonctionner les circuits de lecture 2a et 2b dans une plage de fonctionnement privilégiée qui est adaptée aux différentes conditions d'illumination proposées par la scène observée. La dissociation des conditions d'acquisition entre les photodétecteurs est obtenue en modulant la durée d'acquisition, c'est-à-dire la durée d'intégration des photodétecteurs 1 à l'intérieur d'une fenêtre temporelle d'intégration c'est-à-dire d'une trame.

La modulation de la durée d'acquisition est également avantageuse lorsque les premier et deuxième photodétecteurs 1a et 1b sont sensibles à la même bande spectrale. Si le flux présente une grande variabilité dans le temps ou dans la scène observée à l'intérieur d'une même bande spectrale, il est intéressant d'utiliser deux périodes d'intégration différentes afin de s'adapter à cette variabilité. Il peut être intéressant de distinguer les zones à forte disparité de signal à l'intérieur d'une scène observée et de leur associer un temps d'intégration adapté. En utilisant un temps d'intégration court, la partie de l'image ayant un fort flux peut être exploitable sans pénaliser la partie de l'image à faible flux. Dans l'art antérieur, si la durée d'intégration est commune à tous les photodétecteurs et correspond à un temps d'intégration court. La partie de l'image ayant un fort flux est exploitable et la partie de l'image ayant un faible flux sera associée à un rapport signal sur bruit désavantageux. En revanche, si la durée d'intégration est commune à tous les photodétecteurs et correspond à un temps d'intégration long. La partie de l'image ayant un faible flux est exploitable et la partie de l'image ayant un fort flux est associée à un signal saturé difficilement exploitable.

Il est avantageux de distinguer le fonctionnement des premier et deuxième photodétecteurs 1a et 1b dans une matrice où un premier groupe de photodétecteurs observe une zone à fort flux et où un deuxième groupe de photodétecteurs observe une zone à faible flux.

Selon les modes de réalisation, les premiers et deuxièmes photodétecteurs sont uniformément répartis dans une matrice de photodétecteurs. Dans une variante de réalisation, les premiers et deuxièmes photodétecteurs ne sont pas uniformément répartis dans la matrice de photodétecteurs, par exemple les premiers photodétecteurs forment une zone centrale alors que les deuxièmes photodétecteurs forment une zone périphérique qui entoure la zone centrale.

Pour obtenir une plus grande liberté dans le fonctionnement des circuits de lecture 2, les premier et deuxième circuits de lecture 2a et 2b sont connectés à des circuits de synchronisation 7a et 7b.

Chaque circuit de synchronisation 7 permet de commander une pluralité de phases de fonctionnement dans la trame et notamment une phase d'acquisition et une phase de remise à zéro. Le circuit de synchronisation 7 peut également commander au moins une autre phase de fonctionnement supplémentaire. De cette manière, les actions des différents circuits de lecture 2a/2b sont définies au moyen des circuits de synchronisation 7a/7b.

Dans le mode de réalisation illustré, le premier circuit de synchronisation 7a est connecté au premier circuit lecture 2a et le deuxième circuit de synchronisation 7b est connecté au deuxième circuit lecture 2b.

Cependant, il est avantageux de prévoir que le premier circuit de synchronisation 7a soit connecté à une pluralité de premiers circuits de lecture 2a qui sont actionnés simultanément dans une trame. De la même manière, il est avantageux de prévoir que le deuxième circuit de synchronisation 7b soit connecté à une pluralité de deuxièmes circuits de lecture 2b qui sont également actionnés simultanément.

Comme indiqué précédemment, de manière à pouvoir comparer les informations émises par les deux photodétecteurs 1a et 1b sensibles à deux bandes spectrales différentes ou identiques, il est intéressant de conserver une cohérence temporelle entre les phases d'acquisition. Il est donc intéressant que les circuits de lecture 2a et 2b travaillent avec la même trame.

La cohérence temporelle peut être obtenue en synchronisant les phases d'acquisition entre les différents photodétecteurs 1a et 1b. Le temps d'acquisition est alors identique entre les photodétecteurs et les phases d'acquisition commencent et se terminent en même temps. Les différences de fonctionnement peuvent être limitées à une différence de durée dans les phases de remise à zéro et éventuellement dans l'introduction d'une phase supplémentaire par exemple pour le circuit lecture 2a et non pour le circuit de lecture 2b.

La cohérence temporelle peut également être obtenue en synchronisant les instants de démarrage de la phase d'acquisition pour les photodétecteurs 1a et 1b. Les durées d'acquisition sont différentes entre les circuits de lecture 2a et 2b. Il est également possible de prévoir que les durées de remise à zéro sont différentes entre les circuits de lecture 2a et 2b. Des durées de remise à zéro identiques entre les circuits de lecture 2a et 2b sont également possibles. Une phase de fonctionnement supplémentaire peut être introduite dans l'un des circuits de lecture 2a ou 2b pour compenser des différences entre les durées d'activation et/ou de remise à zéro. Avantageusement, la durée d'une trame est constante pour les photodétecteurs 1a et 1b.

De manière plus générale, la cohérence temporelle peut également être obtenue en englobant la durée de la phase d'acquisition du photodétecteur 1a à l'intérieur de la durée de la phase d'acquisition du photodétecteur 1b.

De manière à présenter un dispositif de détection compact, il est avantageux de conserver un nombre réduit de lignes qui servent aux paramétrages des différents circuits de synchronisation 7 et à la propagation des signaux de commande et de synchronisation.

La synchronisation des circuits de synchronisation 7a et 7b est avantageusement obtenue au moyen du générateur 8 de signal de synchronisation SYNC qui est connecté aux différents circuits de synchronisation 7. Le générateur 8 est configuré pour générer un signal de synchronisation SYNC qui agit comme une base de temps. Ce signal de synchronisation SYNC est reçu par les différents circuits de synchronisation 7 qui traitent ce signal. De manière avantageuse, ce signal de synchronisation SYNC est utilisé pour définir la trame.

De manière avantageuse, le générateur 8 du signal de synchronisation SYNC est mutualisé à tous les circuits de synchronisation 7 pour gagner en compacité et en fiabilité.

Dans le mode de réalisation illustré à la figure 1, le premier circuit de lecture 2a est connecté au premier circuit de synchronisation 7a qui est configuré pour définir la trame ainsi que les phases d'acquisition et de remise à zéro. Le premier circuit de synchronisation 7a est connecté au générateur 8 de signal de synchronisation SYNC.

Le deuxième circuit de lecture 2b est connecté au deuxième circuit de synchronisation 7b qui est configuré pour définir la trame ainsi que les phases d'acquisition et de remise à zéro. Le deuxième circuit de synchronisation 7b est connecté au générateur 8 de signal de synchronisation SYNC.

Les premier et deuxième circuits de synchronisation 7a et 7b sont avantageusement connectés à la ligne de synchronisation qui assure le transit du signal de synchronisation SYNC.

Dans un mode de réalisation particulier, le générateur 8 est configuré pour émettre un premier motif dans le signal de synchronisation SYNC. La synchronisation des différents circuits de synchronisation 7a, 7b est réalisée au moyen de la détection du premier motif prédéfini dans le signal de synchronisation SYNC par les circuits 7a et 7b. Ce premier motif permet avantageusement de définir le début ou la fin d'une trame.

Par exemple, la détection du premier motif prédéfini permet d'initier la trame. De cette manière, la même trame est appliquée par tous les circuit de synchronisation 7a, 7b et donc par tous les circuits de lecture 2a, 2b ce qui facilite une cohérence temporelle entre les différents photodétecteurs 1.

Lorsque que le premier circuit de synchronisation 7a détecte la présence du premier motif, il commande une première action. Cette première action peut être une commande de basculement d'état du circuit de lecture 2a et/ou une autre action, par exemple la recherche d'un second signal initiant un basculement d'état

Le démarrage d'une trame peut être associé à une même action pour les circuits de lecture 2a et 2b, par exemple le démarrage ou l'arrêt de la phase d'acquisition ou de la phase de remise à zéro.

En variante, le démarrage d'une trame peut être associé à une action pour l'un des circuits de lecture 2a et 2b et à une absence d'action pour l'autre des circuits de lecture qui attend un autre signal pour commander une action de manière retardée.

De manière avantageuse, les différents circuits de synchronisation 7a, 7b sont également connectés à un générateur 9 de signal d'horloge CLK qui est une deuxième base de temps. De manière avantageuse, le générateur 9 va émettre un deuxième motif prédéfini de manière répétitive et régulière. Le générateur 9 de signal d'horloge CLK est mutualisé à de nombreux éléments du dispositif de détection et de préférence à au moins tous les circuits 7a et 7b ce qui réduit son impact énergétique.

Le générateur 8 est différent du générateur 9. Dans un mode de réalisation particulier, le générateur 8 peut être un générateur de signal dit « externe » qui est resynchronisé au moyen du générateur 9 appelé générateur « interne ».

Le circuit de synchronisation 7a, 7b va détecter la présence de ce deuxième motif prédéfini et calculer le nombre d'occurrences de ce deuxième motif à partir d'un instant prédéfini, par exemple la détection d'un motif précis en provenance du générateur 8. Une fois que le nombre d'occurrences atteint une valeur prédéterminée, le circuit de synchronisation 7a, 7b va engager une action auprès du circuit de lecture 2a, 2b, par exemple : initier la phase d'acquisition, arrêter la phase d'acquisition, initier la phase de remise à zéro ou arrêter la phase de remise à zéro.

De manière avantageuse, le générateur 9 de signal d'horloge CLK est également utilisé pour gérer le cadencement des circuits logiques qui sont présents dans le dispositif de détection, par exemple les registres, les additionneurs, les comparateurs et d'autres circuits qui reçoivent des informations en provenance du circuit de traitement.

En résumé, le premier circuit de synchronisation 7a est connecté au premier circuit de lecture 2a, au générateur 8 de signal de synchronisation SYNC et au générateur 9 de signal d'horloge CLK. Il en va de même pour le deuxième circuit de synchronisation 7b.

La valeur seuil qui doit être comparée au nombre d'occurrences du deuxième motif peut être enregistrée dans une mémoire 10 également appelée registre du circuit de synchronisation 7a, 7b. De cette manière, la modulation de la durée d'acquisition ou de remise à zéro peut être réalisée simplement en changeant la valeur enregistrée dans la mémoire 10.

Si le registre 10a du circuit 7a possède une valeur différente du registre 10b du circuit 7b, les circuits de lectures 2a et 2b sont synchronisés sur le démarrage de la trame et par exemple sur le démarrage de la phase d'acquisition ou sur le démarrage de la phase de remise à zéro. Les autres étapes de fonctionnement des circuits de lecture 2a, 2b, dans la trame, sont liées différemment par rapport au signal de synchronisation.

Ce mode de réalisation est particulièrement compact car il permet de changer simplement la durée d'acquisition et/ou de remise à zéro en utilisant deux lignes différentes de signaux et une mémoire.

Dans un mode de réalisation particulier, le premier circuit de synchronisation 7a est configuré de manière à :
∘ définir la trame du circuit de lecture 2a au moyen de la détection d'un premier motif prédéfini du signal de synchronisation SYNC,
∘ compter le nombre d'occurrences d'un deuxième motif prédéfini dans le signal d'horloge CLK,
∘ initier ou arrêter une phase d'acquisition de données à l'intérieur de la trame lorsque le nombre d'occurrences du deuxième motif prédéfini dans le signal d'horloge CLK est égal à une première valeur seuil enregistrée dans un registre 10 du premier circuit de synchronisation 7a.

De manière à commander une action du circuit de lecture 2a, le circuit de synchronisation 7a détecte et compte le nombre d'occurrences du deuxième motif prédéfini. Une fois que le nombre d'occurrences atteint la valeur seuil, le circuit de synchronisation 7a bascule entre la phase d'acquisition et la phase de remise à zéro ou inversement. Il est éventuellement possible de basculer dans une phase d'attente ou depuis une phase d'attente.

Selon les modes de réalisation, la détection de la valeur seuil peut se traduire par l'arrêt de la phase de remise à zéro et, à partir de ce moment, les charges émises par le photodétecteur 1 sont stockées dans le condensateur d'intégration 3. Dans d'autres cas de figure, une fois la valeur seuil atteinte, une déconnexion du photodétecteur 1 avec le condensateur d'intégration 3 est effectuée, la remise à zéro peut arriver plus tard. En variante, lorsque la valeur seuil est atteinte, le démarrage de la remise à zéro peut être initié, la tension aux bornes du condensateur 3 est mesurée régulièrement et la dernière mesure avant la remise à zéro est utilisée par le circuit de traitement 6. Il est encore possible de prévoir que lorsque la valeur seuil est atteinte, le circuit de synchronisation 7 peut commander la connexion entre le photodétecteur 1 et le condensateur d'intégration 3.

Ce qui a été présenté pour le circuit de synchronisation 7a peut également être appliqué au circuit de synchronisation 7b.

Il est particulièrement avantageux d'utiliser un deuxième motif commun aux différents circuits de synchronisation 7a et 7b et d'utiliser le nombre d'occurrences pour distinguer les actions à engager sur le premier circuit de lecture 2a et sur le deuxième circuit de lecture 2b.

Le deuxième motif est avantageusement un motif simple, par exemple un front montant, un front descendant ou un créneau, c'est-à-dire un front montant séparé d'un front descendant par état haut ou bas ayant une durée prédéfinie.

L'utilisation de motifs plus complexes pour distinguer les différents circuits de synchronisation 7a et 7b est possible mais nécessite l'emploi de circuits plus complexes. Cela nécessite alors des circuits de synchronisation plus performants afin de s'assurer que les circuits de synchronisation détectent bien le bon motif associé au bon circuit de synchronisation. Il est également plus compliqué d'assurer la synchronisation de certaines actions sur les différents circuits de lecture car des motifs différents ne peuvent être envoyés simultanément par le générateur 9, ni par le générateur 8.

Dans un mode de réalisation avantageux, le circuit de lecture 2 est configuré de manière à ce que le photodétecteur 1 soit couplé au condensateur d'intégration 3 sauf lors de la phase de remise à zéro. Cette configuration particulière permet d'engager l'acquisition dès que la remise à zéro est arrêtée. Dans ce mode de réalisation, il n'y a que deux phases à savoir une phase de remise à zéro et une phase d'acquisition. Ce mode de réalisation est particulièrement avantageux car il est très compact. Cependant, il n'y a pas de phase d'attente où le condensateur 3 n'est pas connecté au photodétecteur 1 et stocke les charges électriques de la phase d'acquisition antérieure.

Dans le mode de réalisation illustré à la figure 1, le circuit de synchronisation 7 agit sur le circuit de remise à zéro 5 de manière à basculer entre les phases de remise à zéro et les phases d'acquisition. Le mode de réalisation de la figure 1 permet de réaliser une configuration avec uniquement une phase d'acquisition et une phase de remise à zéro.

Si le dispositif de détection est configuré pour basculer uniquement entre des phases de remise à zéro et des phases d'acquisition, la valeur enregistrée dans la mémoire 10 permet de définir précisément la durée d'intégration et la durée de remise à zéro.

Selon l'invention, le premier motif émis par le générateur 8 est associé à une action du circuit de synchronisation 7, par exemple le début de la phase de remise à zéro ou la fin de la phase de remise à zéro. Le premier motif permet de synchroniser la phase d'acquisition ou la phase de remise à zéro. L'autre phase de fonctionnement du circuit de lecture 2a, 2b est définie au moyen du nombre d'occurrences du deuxième motif généré par le générateur 9.

En variante, dans un mode de réalisation hors de l'invention, le premier motif émis par le générateur 8 n'est pas associé à une action du circuit de synchronisation 7. La détection du premier motif sert de point de départ pour le décompte du nombre d'occurrences du deuxième motif. Il est alors avantageux d'utiliser une autre valeur seuil et une autre comparaison pour engager une autre action du circuit de lecture.

Dans une variante de réalisation, le générateur 8 peut émettre un motif additionnel qui impose le déclenchement d'une action dans les circuits de synchronisation 7a, 7b et donc dans les circuits de lecture 2a, 2b. Le motif additionnel est différent du premier motif et l'action associée au motif additionnel est différente de l'action associée au premier motif. Le motif additionnel peut imposer le démarrage de la phase d'acquisition ou le démarrage de la phase de remise à zéro ou une autre action.

Dans un mode de réalisation particulier hors de l'invention, le deuxième circuit de synchronisation 7b peut être dépourvu de la mémoire 10 stockant la valeur seuil. L'ajustement aux conditions d'illumination peut être réalisé par le générateur 8 pour le deuxième circuit de lecture 2b. Le générateur 8 va émettre un premier motif et un motif additionnel qui déclencheront la phase d'acquisition et la phase de remise à zéro. Dans ce cas de figure, la trame est avantageusement définie pour que le circuit de lecture 2b s'adapte aux conditions d'illumination dans la deuxième bande spectrale afin que le circuit de lecture 2b fonctionne dans une gamme de tension préférentielle aux bornes du condensateur. Le premier circuit de synchronisation 7a permet d'adapter les conditions d'acquisition pour le circuit de lecture 2a fonctionne également dans une gamme de tension préférentielle aux bornes du condensateur.

En revanche, l'ajustement du fonctionnement du premier circuit de lecture 2a est réalisé en modulant la valeur seuil dans la mémoire 10 du premier circuit de synchronisation 7a. Un des motifs générés par le générateur 8 sera sans effet sur le premier circuit de lecture 2a qui aura déjà basculé lorsque le nombre d'occurrences du deuxième motif aura atteint sa valeur seuil.

Dans une variante de réalisation qui peut être combinée avec les modes précédents, le comptage des deuxièmes motifs prédéfinis dans le signal d'horloge CLK peut être conditionné à la détection d'un troisième motif prédéfini dans le signal de synchronisation SYNC et généré par le générateur 8. Cette particularité permet de limiter la taille de la mémoire 10 contenant la valeur seuil. La détection du premier motif par le circuit de synchronisation 7 engage une action et cette action se termine lorsque le circuit de synchronisation 7 détecte le nombre d'occurrences du deuxième motif après la détection du troisième motif.

Dans un mode de réalisation, le troisième motif prédéfini est identique au premier motif prédéfini ce qui facilite la réalisation du générateur 8. Dans un autre mode de réalisation, le troisième motif prédéfini est différent du premier motif. Le premier motif et/ou le troisième motif peuvent être un front montant, un front descendant ou un créneau.

Dans un cas particulier, la valeur seuil enregistrée dans la mémoire 10 du premier circuit de synchronisation 7a ne peut être changée et la modulation de la durée d'acquisition ou de remise à zéro est réalisée en changeant simplement la position du troisième motif prédéfini dans la trame, c'est-à-dire l'instant d'apparition du troisième motif prédéfini.

Dans un mode de réalisation avantageux, le premier motif, le deuxième motif et le troisième motif sont choisis parmi des fronts montant ou descendant ce qui facilite la détection des motifs et permet l'obtention d'un dispositif compact. Si le front montant est disposé au milieu de la période entre deux fronts descendants, la valeur de la mémoire peut être configurée pour contenir au maximum le nombre d'occurrences dans une demi-période. De manière avantageuse, les fronts montants et descendants du signal de synchronisation SYNC sont décalés des fronts montants et descendants du signal d'horloge CLK pour faciliter les détections et les basculements.

Dans un mode de réalisation, le premier et le troisième motifs sont un front montant du signal de synchronisation SYNC. Dans un autre mode de réalisation, le premier et le troisième motifs sont un front descendant du signal de synchronisation SYNC.

Dans une variante, un autre motif plus complexe peut être détecté dans le signal d'horloge CLK et/ou dans le signal de synchronisation SYNC.

Dans un mode de réalisation particulier, si le circuit de détection comporte plusieurs premiers circuits de lecture 2a, tous les premiers circuits de lecture 2a sont connectés à un même premier circuit de synchronisation 7a. De cette manière, tous les premiers circuits de lecture 2a présentent la même durée d'intégration et ils sont synchronisés. Le premier circuit de synchronisation 7a est mutualisé pour un gain en compacité.

Cette solution est nettement plus compacte qu'un mode de réalisation dans lequel un circuit de synchronisation 7a est dédié à chaque premier circuit de lecture 2a. Cette solution est également plus économe énergétiquement car le nombre de circuits de synchronisation 7a est réduit.

Dans encore un autre mode de réalisation particulier, une pluralité de circuits de lecture 2a est connectée à un premier circuit de synchronisation 7a spécifique. De cette manière, il est possible de moduler la durée d'intégration par groupes de premiers circuits de lecture 2a.

Dans un mode de réalisation avantageux illustré à la figure 1, le deuxième circuit de synchronisation 7b est également pourvu d'une mémoire 10 stockant une deuxième valeur seuil et il est configuré pour fonctionner comme le premier circuit de synchronisation 7a.

Le deuxième circuit de synchronisation 7b est connecté au deuxième circuit de lecture 2b, au générateur de signal de synchronisation 8 et au générateur de signal d'horloge 9. Le deuxième circuit de synchronisation 7b est configuré de manière à
∘ définir la trame au moyen de la détection du premier motif prédéfini du signal de synchronisation SYNC,
∘ compter le nombre d'occurrences d'un quatrième motif prédéfini dans le signal d'horloge CLK,
∘ initier ou arrêter une phase d'acquisition de données à l'intérieur d'une trame lorsque le nombre d'occurrences du quatrième motif prédéfini dans le signal d'horloge est égal à une deuxième valeur seuil enregistrée dans un registre 10 du deuxième circuit de synchronisation 7b.

Dans un mode de réalisation avantageux, le quatrième motif prédéfini est identique au deuxième motif prédéfini ce qui facilite l'utilisation du signal d'horloge CLK pour ses autres applications. En variante, le quatrième motif peut être différent du deuxième motif.

L'utilisation d'un deuxième circuit de synchronisation 7b avec une mémoire 10 stockant une valeur seuil permet un meilleur ajustement aux conditions d'illumination. Le deuxième circuit de synchronisation 7b peut reprendre tous les modes de réalisation présentés pour le premier circuit de synchronisation 7a.

Il est avantageux d'avoir un deuxième circuit de synchronisation 7b à durée d'acquisition modulable si au moins trois bandes spectrales différentes sont détectées et/ou si une souplesse supplémentaire est recherchée par rapport à la durée minimale de la trame. Cependant, pour commander trois groupes différents de photodétecteurs, il est particulièrement avantageux d'utiliser trois circuits de synchronisation différents.

De manière générale, pour commander N types différents de photodétecteurs qui sont aptes à détecter N bandes spectrales différentes, il est avantageux que chaque type de photodétecteur soit associé à un circuit de synchronisation dédié ce qui apporte une grande facilité d'utilisation dans des conditions d'illumination variées.

De manière avantageuse, le circuit de détection est configuré pour présenter autant de durées d'intégration différentes que de bandes spectrales analysées. Deux photodétecteurs associés à la même bande spectrale présentent avantageusement la même durée d'acquisition afin de faciliter la comparaison des informations.

De manière avantageuse, la remise à zéro du condensateur d'intégration 3 correspond au démarrage d'une trame et le même premier motif est choisi pour tous les circuits de lecture 2a, 2b de manière à assurer une cohérence temporelle. De cette manière, il est particulièrement facile d'obtenir la mise en place d'une trame commune à tous les circuits de lecture 2a, 2b, c'est-à-dire à tous les photodétecteurs. De manière avantageuse, le démarrage d'une trame est suivi de la mesure des informations relative à la trame précédente puis de la remise à zéro du condensateur d'intégration pour préparer l'acquisition à suivre.

Dans un mode de réalisation préférentiel, il est possible de forcer un basculement de configuration du circuit de lecture par exemple le démarrage ou l'arrêt de la phase d'acquisition ou encore le démarrage ou l'arrêt de la phase de la remise à zéro si le circuit de synchronisation détecte un cinquième motif prédéfini dans le signal de synchronisation SYNC. Le cinquième motif est également appelé motif prioritaire. De manière particulièrement avantageuse, si le circuit de synchronisation est configuré pour compter les occurrences du deuxième motif dès le démarrage de la trame, il peut être avantageux de forcer le démarrage de l'acquisition ou l'arrêt de la remise à zéro à la détection du troisième code qui intervient avantageusement à la mipériode. Forcer le démarrage de l'acquisition ou le démarrage de la remise à zéro permet définir une durée prédéfinie d'intégration qui peut être minimale ou maximale pour contrecarrer par exemple une défaillance d'un registre 10.

Le fonctionnement du circuit de détection peut être présenté de la manière suivante :
- prévoir le dispositif de détection comportant:
   ∘ un premier photodétecteur 1a sensible à une première longueur d'onde,
   ∘ un deuxième photodétecteur 1b sensible à une deuxième longueur d'onde,
   ∘ un premier circuit de lecture 2a muni d'un premier condensateur d'intégration 3a couplé au premier photodétecteur 1a de manière à stocker les charges électriques émises par le premier photodétecteur 1a,
   ∘ un deuxième circuit de lecture 2b muni d'un deuxième condensateur d'intégration 3b connecté au deuxième photodétecteur 1b de manière à stocker les charges électriques émises par le deuxième photodétecteur 1b,
   ∘ des premier et deuxième circuits de remise à zéro 5a et 5b configurés de manière à remettre à zéro respectivement le premier condensateur d'intégration 3a et le deuxième condensateur d'intégration 3b,
- détecter un premier motif prédéfini dans le signal de synchronisation SYNC pour initier une trame pour les premier et deuxième circuits de lecture,
- compter le nombre d'occurrences d'un deuxième motif prédéfini dans un signal d'horloge CLK,
- comparer ledit nombre d'occurrences par rapport à une valeur seuil, lorsque le nombre d'occurrences atteint la valeur seuil, le premier circuit de lecture 2a initie ou arrête une phase d'acquisition de données.

Le générateur 8 de signal de synchronisation SYNC émet un premier motif prédéfini dans le signal de synchronisation SYNC. Les circuits de synchronisation 7a et 7b détectent le premier motif prédéfini ce qui initie une nouvelle trame pour les circuits de lecture 2a et 2b.

Au moins le premier circuit de synchronisation 7a compte le nombre d'occurrences du deuxième motif prédéfini dans le signal d'horloge CLK. Le nombre d'occurrences est comparé à la valeur seuil présente dans la mémoire 10. Lorsque le nombre d'occurrences atteint la valeur seuil, le premier circuit de synchronisation 7a commande une action sur le premier circuit de lecture 2a qui peut par exemple initier ou arrêter la phase d'acquisition de données ou la phase de remise à zéro.

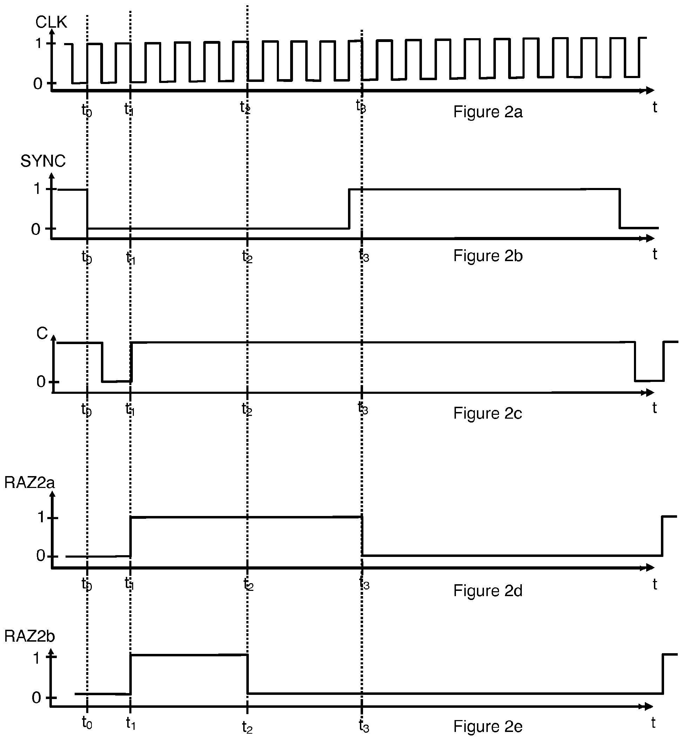

Dans le mode de fonctionnement illustré aux figures 2a-2e, plusieurs signaux sont représentés. Le signal d'horloge CLK est représenté sur la figure 2a. Le signal de synchronisation SYNC est représenté sur la figure 2b. Le signal compteur C est représenté sur la figure 2c. Le signal de remise à zéro du condensateur 3a est représenté sur la figure 2d. Le signal de remise à zéro du condensateur 3b est représenté sur la figure 2e.

A un instant t₀, le générateur 8 de signal de synchronisation SYNC émet un premier motif prédéfini, ici un front descendant. Le premier et le deuxième circuits de synchronisation 7a, 7b détectent ce premier motif prédéfini annonçant le démarrage d'une nouvelle trame.

Dans l'exemple particulier illustré aux figures 2a-2e, le premier et le deuxième circuits de synchronisation 7a, 7b déclenchent la mesure de l'information stockée dans le condensateur d'intégration 3 (représentée par le compteur C à la figure 2c). Les charges électriques stockées dans le condensateur 3 sont mesurées et l'information est transmise au circuit de traitement 6. La fin de la mesure par le compteur C est représentée par l'instant t₁. A l'instant t₁, le premier et le deuxième circuits de synchronisation 7a, 7b déclenchent la remise à zéro du premier condensateur d'intégration 3a et du deuxième condensateur d'intégration 3b. Les deux signaux RAZ2a et RAZ2b passent à l'état haut.

Dans le mode de réalisation illustré, le générateur 8 émet un troisième motif représenté par un front montant (troisième motif) sur le signal de synchronisation SYNC. Les premier et deuxième circuits de synchronisation 7a et 7b détectent le troisième motif et comptent les occurrences des deuxièmes et quatrièmes motifs à partir de cet instant. Dans l'exemple illustré, le premier circuit de synchronisation 7a est configuré pour arrêter la phase de remise à zéro du condensateur 3a (figure 2d) à l'instant t₃ après la détection d'un seul deuxième motif, ici un front descendant, sur le signal d'horloge CLK qui fait suite à la détection d'un troisième motif, ici un front montant, sur le signal de synchronisation SYNC (figure 2b).

Dans le mode de réalisation illustré, le deuxième circuit de synchronisation 7b est configuré pour arrêter la phase de remise à zéro du condensateur 3b (figure 2e) à l'instant t₂ après la détection de six deuxièmes motifs, ici des fronts descendants, sur le signal d'horloge CLK qui font suite à la détection d'un premier motif, ici un front descendant, sur le signal de synchronisation SYNC, c'est-à-dire dès le démarrage de la trame.

Dans la configuration illustrée, la trame est divisée en un temps d'acquisition et un temps de remise à zéro. Le premier circuit de lecture 2a a donc une durée d'acquisition (RAZ2a=0) qui est plus courte que la durée d'acquisition du deuxième circuit de lecture 2b (RAZ2b=0).

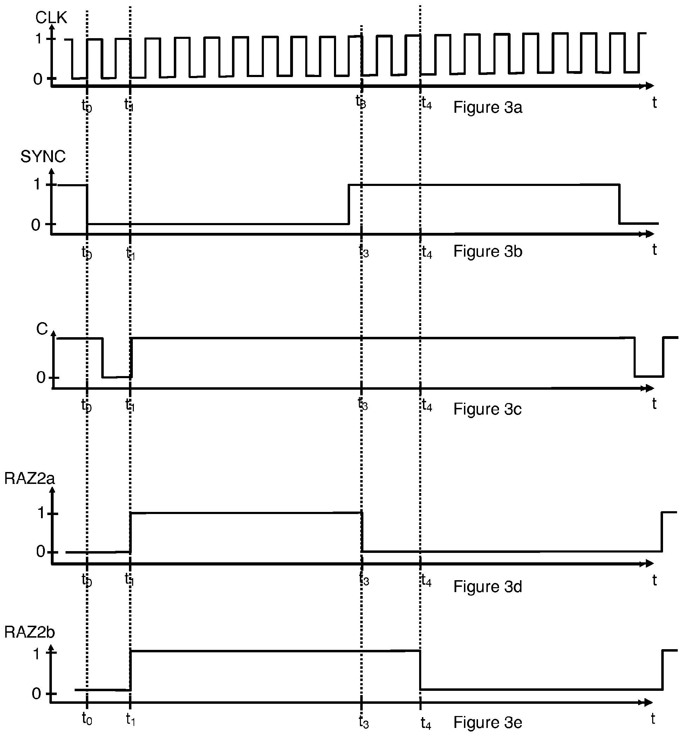

Dans l'exemple particulier illustré aux figures 3a-3e, le premier et le deuxième circuits de synchronisation 7a et 7b déclenchent la mesure de l'information stockée dans le condensateur d'intégration 3 (représenté par le compteur C sur la figure 2c). La fin de la mesure par le compteur C est représentée par l'instant t₁. A l'instant t₁, le premier et le deuxième circuits de synchronisation 7a et 7b déclenchent ensuite, la remise à zéro du premier condensateur d'intégration 3a et du deuxième condensateur d'intégration 3b. Les deux signaux RAZ2a et RAZ2b passent à l'état haut.

Dans le mode de réalisation illustré, le premier circuit de synchronisation 7a est configuré pour arrêter la phase de remise à zéro du condensateur 3a (figure 3d) à l'instant t₃ après la détection d'un deuxième motif, ici un front descendant, sur le signal d'horloge CLK qui fait suite à la détection d'un troisième motif, ici un front montant, sur le signal de synchronisation SYNC.

Dans le mode de réalisation illustré, le deuxième circuit de synchronisation 7b est configuré pour arrêter la phase de remise à zéro du condensateur 3b (figure 3e) à l'instant t₄ après la détection de trois deuxièmes motifs, ici des fronts descendants, sur le signal d'horloge CLK qui font suite à la détection d'un troisième motif, ici un front montant, sur le signal de synchronisation SYNC, c'est-à-dire dès le démarrage de la deuxième partie de la période.

Dans la configuration illustrée, la trame est divisée en un temps d'acquisition et un temps de remise à zéro. Le premier circuit de lecture 2a a donc une durée d'acquisition qui est plus longue que la durée d'acquisition du deuxième circuit de lecture 2b.

Dans les différents modes de réalisation illustrés, le circuit de détection comporte des premier et deuxième photodétecteurs associés à des premier et deuxième circuits de lecture ainsi qu'à des premier et deuxième circuits de synchronisation. Comme indiqué plus haut, le circuit de détection peut être utilisé sur plus de deux bandes spectrales.

Il est alors avantageux de prévoir N photodétecteurs additionnels 1N en plus des premier et deuxième photodétecteurs. Les N photodétecteurs additionnels 1N sont sensibles à N longueurs d'onde supplémentaires qui sont avantageusement différentes des première et deuxième longueurs d'onde. N est un entier supérieur ou égal à 1. En alternative, il est également possible de prévoir que les longueurs d'ondes supplémentaires sont identiques à la première longueur d'onde et/ou à la deuxième longueur d'onde.

Les N photodétecteurs additionnels sont associés à N circuits de lecture 2N supplémentaires munis chacun d'un condensateur d'intégration. Le circuit de lecture 2N de rang N est couplé au photodétecteur additionnel 1N de rang N et est configuré pour définir au moins des première et deuxième configurations différentes comprenant une configuration d'acquisition où des charges électriques émises par le photodétecteur additionnel 1N de rang N sont stockées dans le condensateur d'intégration 3N de rang N et une configuration de remise à zéro du condensateur d'intégration 3N de rang N.

Le dispositif comporte également N circuits de synchronisation 7N qui sont connectés aux N circuit de lecture 2N, au générateur de signal de synchronisation 8 et au générateur de signal d'horloge 9.

Le circuit de synchronisation 7N de rang N est configuré de manière à :
∘ commander une action du circuit de synchronisation 7N de rang N en réponse à la détection d'un premier motif prédéfini émis par le générateur 8 de signal de synchronisation SYNC et
∘ compter un nombre d'occurrences d'un motif additionnel prédéfini de rang N dans le signal d'horloge CLK et
∘ basculer le circuit de lecture 2N de rang N d'une configuration initiale à une autre configuration lorsque le nombre d'occurrences d'un motif additionnel prédéfini de rang N dans le signal d'horloge CLK est égal à une Nième valeur seuil enregistrée dans un registre 10 du circuit de synchronisation 7N de rang N, la configuration initiale ou l'autre configuration étant choisie parmi la première configuration et la deuxième configuration.

De cette manière, il est alors possible de réaliser un dispositif de détection qui est en mesure de détecter du rayonnement électromagnétique dans au moins deux bandes spectrales différentes. Il est également possible de dissocier des photodétecteurs à l'intérieur d'une même bande spectrale afin de séparer les zones à fort flux et les zones à faible flux.

Le motif additionnel prédéfini de rang N peut être identique ou différent au deuxième motif et/ou au quatrième motif.

Les fonctionnalités présentées pour le premier circuit de synchronisation 7a et/ou pour le deuxième circuit de synchronisation 7b peuvent être reprises pour le circuit de synchronisation 7N de rang N.

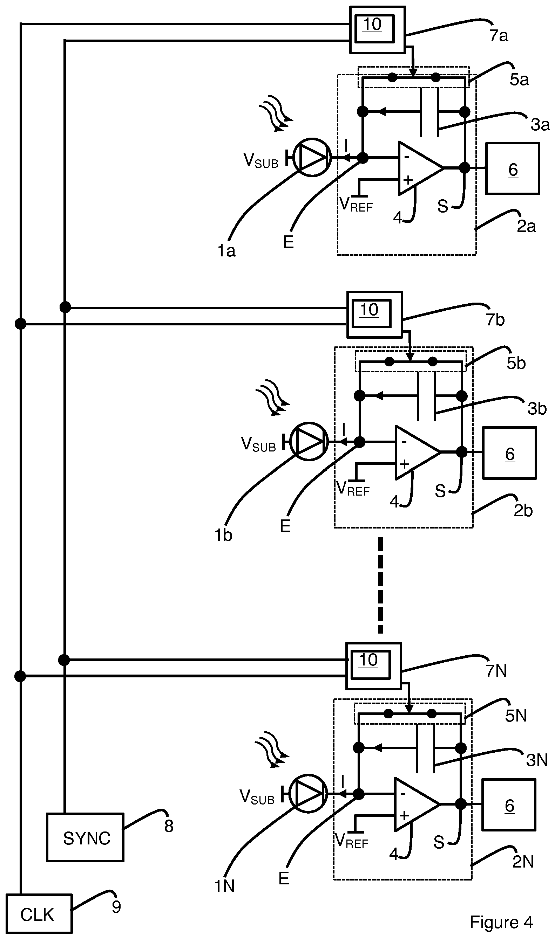

Un tel mode de réalisation est illustré à la figure 4.

Les modes de réalisation présentés plus haut permettent de dissocier les fonctionnements des deux circuits de lecture par exemple en différenciant les valeurs seuils présentes dans les registres. Les valeurs enregistrées dans les registres peuvent être préenregistrées et adaptées par l'utilisateur ou il est possible d'adapter la valeur du registre en fonction de quantité de charges électriques enregistrées dans les condensateurs d'intégration afin de s'adapter à la force du signal électromagnétique reçu.

## Revendications

1. Dispositif de détection comportant:
- un premier photodétecteur (1a) et un deuxième photodétecteur (1b) respectivement sensibles à une première longueur d'onde et à une deuxième longueur d'onde,
- un premier circuit de lecture (2a) muni d'un premier condensateur d'intégration (3a) couplé au premier photodétecteur (1a) et configuré pour définir au moins des première et deuxième configurations différentes comprenant une configuration d'acquisition où des charges électriques émises par le premier photodétecteur (1a) sont stockées dans le premier condensateur d'intégration (3a) et une configuration de remise à zéro du premier condensateur d'intégration (3a),
- un deuxième circuit de lecture (2b) muni d'un deuxième condensateur d'intégration (3b) couplé au deuxième photodétecteur (1b) et configuré pour définir au moins des première et deuxième configurations différentes comprenant une configuration d'acquisition où des charges électriques émises par le deuxième photodétecteur (1b) sont stockées dans le deuxième condensateur d'intégration (3b) et une configuration de remise à zéro du deuxième condensateur d'intégration (3b),
- un générateur (8) de signal de synchronisation (SYNC) définissant au moins une trame,
- un générateur (9) de signal d'horloge (CLK),
- un premier circuit de synchronisation (7a) connecté au premier circuit de lecture (2a), au générateur (8) de signal de synchronisation (SYNC) et au générateur (9) de signal d'horloge (CLK), le premier circuit de synchronisation (7a) étant configuré de manière à
∘ commander une action du premier circuit de synchronisation (7a) en réponse à la détection d'un premier motif prédéfini émis par le générateur (8) de signal de synchronisation (SYNC), l'action étant choisie parmi un démarrage de la phase d'acquisition, un arrêt de la phase d'acquisition et une phase de remise à zéro et
∘ compter un nombre d'occurrences d'un deuxième motif prédéfini dans le signal d'horloge (CLK) et
∘ basculer le premier circuit de lecture (2a) d'une configuration initiale à une autre configuration lorsque le nombre d'occurrences du deuxième motif prédéfini est égal à une première valeur seuil enregistrée dans un registre (10) du premier circuit de synchronisation (7a), la configuration initiale ou l'autre configuration étant choisie au moins parmi la première configuration et la deuxième configuration,
- un deuxième circuit de synchronisation (7b) connecté au deuxième circuit de lecture (2b), au générateur de signal de synchronisation (8) et au générateur de signal d'horloge (9), le deuxième circuit de synchronisation (7b) étant configuré de manière à :
∘ commander une action du deuxième circuit de synchronisation (7b) en réponse à la détection du premier motif prédéfini émis par le générateur (8) de signal de synchronisation (SYNC) , l'action étant choisie parmi un démarrage de la phase d'acquisition, un arrêt de la phase d'acquisition et une phase de remise à zéro,
∘ compter un nombre d'occurrences d'un quatrième motif prédéfini dans le signal d'horloge (CLK) et
∘ basculer le deuxième circuit de lecture (2b) d'une configuration initiale à une autre configuration lorsque le nombre d'occurrences d'un quatrième motif prédéfini dans le signal d'horloge (CLK) est égal à une deuxième valeur seuil enregistrée dans un registre (10) du deuxième circuit de synchronisation (7b), la configuration initiale ou l'autre configuration étant choisie parmi la première configuration et la deuxième configuration,
et dans lequel le deuxième motif prédéfini est différent du quatrième motif prédéfini et/ou la première valeur seuil est différente de la deuxième valeur seuil pour que la durée d' intégration du premier photodétecteur (1a) soit différente de la durée d'intégration du deuxième photodétecteur (1b) dans une trame.

2. Dispositif de détection selon la revendication 1 **caractérisé en ce que** le premier circuit de synchronisation (7a) est configuré de manière à initier le comptage du nombre d'occurrences du deuxième motif prédéfini en réponse à la détection du premier motif prédéfini dans le signal de synchronisation (SYNC).

3. Dispositif de détection selon la revendication 1 **caractérisé en ce que** le premier circuit de synchronisation (7a) est configuré de manière à initier le comptage du nombre d'occurrences du deuxième motif prédéfini en réponse à la détection d'un troisième motif prédéfini dans le signal de synchronisation (SYNC) et pour commander un basculement de configuration du premier circuit de lecture (2a) au moyen du premier circuit de synchronisation (7a) en réponse à la détection d'un premier motif prédéfini.

4. Dispositif de détection selon l'une quelconque des revendications précédentes **caractérisé en ce que** le premier circuit de synchronisation (7a) est configuré de manière à commander un basculement de configuration du premier circuit de lecture (2a) en réponse à la détection d'un motif prioritaire dans le signal de synchronisation (SYNC).

5. Dispositif de détection selon la revendication 4 **caractérisé en ce que** le basculement de configuration du premier circuit de lecture (2a) en réponse à la détection du motif prioritaire est configuré pour initier ou terminer la phase d'acquisition.

6. Dispositif de détection selon la revendication 1 **caractérisé en ce que** le quatrième motif prédéfini est identique au deuxième motif prédéfini et **en ce que** la première valeur seuil est différente de la deuxième valeur seuil.

7. Dispositif de détection selon l'une des revendications précédentes **caractérisé en ce que** la première longueur d'onde est identique à la deuxième longueur d'onde.

8. Dispositif de détection selon la revendication précédente **caractérisé en ce que** la première valeur seuil est différente de la deuxième valeur seuil.

9. Dispositif de détection selon l'une quelconque des revendications 1 à 6 **caractérisé en ce que** la première longueur d'onde est différente de la deuxième longueur d'onde.

10. Dispositif de détection selon l'une quelconque des revendications précédentes **caractérisé en ce qu'**il comporte :
- N photodétecteurs additionnels (1N) sensibles à N longueurs d'onde supplémentaires différentes des première et deuxième longueurs d'onde, avec N un entier supérieur ou égal à 1,
- N circuits de lecture (2N) munis chacun d'un condensateur d'intégration, le circuit de lecture de rang N (3N) étant couplé au photodétecteur additionnel (1N) et configuré pour définir au moins des première et deuxième configurations différentes comprenant une configuration d'acquisition où des charges électriques émises par le photodétecteur additionnel de rang N (1N) sont stockées dans le condensateur d'intégration de rang N (3N) et une configuration de remise à zéro du condensateur d'intégration de rang N (3N),
- N circuits de synchronisation (7N) connectés aux N circuits de lecture (2N), au générateur de signal de synchronisation (8) et au générateur de signal d'horloge (9), le circuit de synchronisation (7N) de rang N étant configuré de manière à :
∘ commander une action du circuit de synchronisation (7N) de rang N en réponse à la détection d'un premier motif prédéfini émis par le générateur (8) de signal de synchronisation (SYNC) et
∘ compter un nombre d'occurrences d'un motif additionnel prédéfini de rang N dans le signal d'horloge (CLK) et
∘ basculer le circuit de lecture (2N) de rang N d'une configuration initiale à une autre configuration lorsque le nombre d'occurrences d'un motif additionnel prédéfini de rang N dans le signal d'horloge (CLK) est égal à une Nième valeur seuil enregistrée dans un registre (10) du circuit de synchronisation (7N) de rang N, la configuration initiale ou l'autre configuration étant choisie parmi la première configuration et la deuxième configuration.

11. Dispositif de détection selon l'une quelconque des revendications précédentes **caractérisé en ce que** le premier circuit de lecture (2a) est configuré pour réaliser la remise à zéro du premier condensateur d'intégration (3a) pendant que le premier photodétecteur (1a) est connecté au premier condensateur d'intégration (3a) et **en ce que** le premier circuit de synchronisation (7a) est configuré de manière à initier la phase d'acquisition en arrêtant la phase de remise à zéro.

12. Dispositif de détection selon l'une quelconque des revendications précédentes **caractérisé en ce que** le premier motif prédéfini est un front montant et **en ce que** le troisième motif prédéfini est un front descendant.

13. Dispositif de détection selon l'une quelconque des revendications 1 à 11 **caractérisé en ce que** le premier motif prédéfini est un front descendant et **en ce que** le troisième motif prédéfini est un front montant.

14. Dispositif de détection selon l'une quelconque des revendications précédentes **caractérisé en ce que** le deuxième motif prédéfini est un front descendant ou un front montant.

15. Dispositif de détection selon l'une quelconque des revendications précédentes **caractérisé en ce qu'**il comporte une pluralité de premiers photodétecteurs (1a) connectés à une pluralité de premiers circuits de lecture (2a) et une pluralité de deuxièmes photodétecteurs (1b) connectés à une pluralité de deuxièmes circuits de lecture (2b), la pluralité de premiers circuits de lecture (2a) est connectée au premier circuit de synchronisation (7a).

16. Dispositif de détection selon la revendication précédente **caractérisé en ce que** la pluralité de deuxièmes circuits de lecture (2b) est connectée au deuxième circuit de synchronisation (7b).

17. Procédé de gestion d'un dispositif de détection **caractérisé en ce qu'**il comporte les étapes suivantes :
- prévoir le dispositif de détection comportant:
∘ un premier photodétecteur (1a) et un deuxième photodétecteur (1b) respectivement sensibles à une première longueur d'onde et à une deuxième longueur d'onde,
∘ un premier circuit de lecture (2a) muni d'un premier condensateur d'intégration (3a) couplé au premier photodétecteur (1a) et configuré pour définir au moins des première et deuxième configurations différentes comprenant une configuration d'acquisition où des charges électriques émises par le premier photodétecteur (1a) sont stockées dans le premier condensateur d'intégration (3a) et une configuration de remise à zéro du premier condensateur d'intégration (3a),
∘ un deuxième circuit de lecture (2b) muni d'un deuxième condensateur d'intégration (3b) couplé au deuxième photodétecteur (1b) et configuré pour définir au moins des première et deuxième configurations différentes comprenant une configuration d'acquisition où des charges électriques émises par le deuxième photodétecteur (1b) sont stockées dans le deuxième condensateur d'intégration (3b) et une configuration de remise à zéro du deuxième condensateur d'intégration (3b),
- détecter un premier motif prédéfini dans un signal de synchronisation pour initier une trame pour les premier et deuxième circuits de lecture (2a, 2b),
- compter le nombre d'occurrences d'un deuxième motif prédéfini et d'un quatrième motif prédéfini dans un signal d'horloge,
- comparer ledit nombre d'occurrences du deuxième motif prédéfini par rapport à une première valeur seuil, lorsque le nombre d'occurrences atteint la valeur seuil, le premier circuit de lecture initie ou arrête une phase de remise à zéro du premier condensateur d'intégration (3a) ou une phase d'acquisition de données,
- comparer ledit nombre d'occurrences du quatrième motif prédéfini par rapport à une deuxième valeur seuil, lorsque le nombre d'occurrences atteint la deuxième valeur seuil, le deuxième circuit de lecture initie ou arrête une phase de remise à zéro du deuxième condensateur d'intégration (3b) ou une phase d'acquisition de données
procédé dans lequel le deuxième motif prédéfini est différent du quatrième motif prédéfini et/ou la première valeur seuil est différente de la deuxième valeur seuil pour que la durée d' intégration du premier photodétecteur (1a) soit différente de la durée d'intégration du deuxième photodétecteur (1b) dans la trame.

## Patentansprüche

1. Detektionsvorrichtung, umfassend:
- einen ersten Fotodetektor (1a) und einen zweiten Fotodetektor (1b), die jeweils für eine erste Wellenlänge und eine zweite Wellenlänge empfindlich sind,
- eine erste Ausleseschaltung (2a), die mit einem ersten Integrationskondensator (3a) versehen ist, der mit dem ersten Fotodetektor (1a) gekoppelt und dazu konfiguriert ist, mindestens eine erste und eine zweite Konfiguration zu definieren, die sich unterscheiden, einschließlich einer Erfassungskonfiguration, in der elektrische Ladungen, die vom ersten Fotodetektor (1a) ausgegeben werden, im ersten Integrationskondensator (3a) gespeichert werden, und einer Rücksetzungskonfiguration des ersten Integrationskondensators (3a),
- eine zweite Ausleseschaltung (2b), die mit einem zweiten Integrationskondensator (3b) versehen ist, der mit dem zweiten Fotodetektor (1b) gekoppelt und dazu konfiguriert ist, mindestens eine erste und eine zweite Konfiguration zu definieren, die sich unterscheiden, einschließlich einer Erfassungskonfiguration, in der elektrische Ladungen, die vom zweiten Fotodetektor (1b) ausgegeben werden, im zweiten Integrationskondensator (3b) gespeichert werden, und einer Rücksetzungskonfiguration des zweiten Integrationskondensators (3b),
- einen Generator (8) eines Synchronisationssignals (SYNC), das mindestens einen Frame definiert,
- einen Generator (9) eines Taktsignals (CLK),
- eine erste Synchronisationsschaltung (7a), die mit der ersten Ausleseschaltung (2a), dem Generator (8) des Synchronisationssignals (SYNC) und dem Generator (9) des Taktsignals (CLK) verbunden ist, wobei die erste Synchronisationsschaltung (7a) dazu konfiguriert ist:
o in Reaktion auf die Detektion eines ersten vordefinierten Musters, das vom Generator (8) des Synchronisationssignals (SYNC) ausgegeben wird, eine Aktion der ersten Synchronisationsschaltung (7a) zu steuern, wobei die Aktion aus einem Start der Erfassungsphase, einem Ende der Erfassungsphase und einer Rücksetzungsphase gewählt ist, und
∘ eine Anzahl des Auftretens eines zweiten vordefinierten Musters im Taktsignal (CLK) zu zählen, und
∘ die erste Ausleseschaltung (2a) von einer Anfangskonfiguration in eine andere Konfiguration umzuschalten, wenn die Anzahl des Auftretens des zweiten vordefinierten Musters gleich einem ersten Schwellenwert ist, der in einem Register (10) der ersten Synchronisationsschaltung (7a) gespeichert ist, wobei die Anfangskonfiguration oder die andere Konfiguration mindestens aus der ersten Konfiguration und der zweiten Konfiguration gewählt ist,
- eine zweite Synchronisationsschaltung (7b), die mit der zweiten Ausleseschaltung (2b), dem Generator des Synchronisationssignals (8) und dem Generator des Taktsignals (9) verbunden ist, wobei die zweite Synchronisationsschaltung (7b) dazu konfiguriert ist:
∘ in Reaktion auf die Detektion des ersten vordefinierten Musters, das vom Generator (8) des Synchronisationssignals (SYNC) ausgegeben wird, eine Aktion der zweiten Synchronisationsschaltung (7b) zu steuern, wobei die Aktion aus einem Start der Erfassungsphase, einem Ende der Erfassungsphase und einer Rücksetzungsphase ausgewählt wird,
∘ eine Anzahl des Auftretens eines vierten vordefinierten Musters im Taktsignal (CLK) zu zählen, und
∘ die zweite Ausleseschaltung (2b) von einer Anfangskonfiguration in eine andere Konfiguration umzuschalten, wenn die Anzahl des Auftretens des vierten vordefinierten Musters im Taktsignal (CLK) gleich einem zweiten Schwellenwert ist, der in einem Register (10) der zweiten Synchronisationsschaltung (7b) gespeichert ist, wobei die Anfangskonfiguration oder die andere Konfiguration aus der ersten Konfiguration und der zweiten Konfiguration gewählt ist,
und wobei sich das zweite vordefinierte Muster vom vierten vordefinierten Muster unterscheidet und/oder der erste Schwellenwert sich vom zweiten Schwellenwert unterscheidet, damit sich die Integrationszeit des ersten Fotodetektors (1a) in einem Frame von der Integrationszeit des zweiten Fotodetektors (1b) unterscheidet.

2. Detektionsvorrichtung nach Anspruch 1, **dadurch gekennzeichnet, dass** die erste Synchronisationsschaltung (7a) dazu konfiguriert ist, in Reaktion auf die Detektion des ersten vordefinierten Musters im Synchronisationssignal (SYNC) das Zählen der Anzahl des Auftretens des zweiten vordefinierten Musters zu initiieren.

3. Detektionsvorrichtung nach Anspruch 1, **dadurch gekennzeichnet, dass** die erste Synchronisationsschaltung (7a) dazu konfiguriert ist, in Reaktion auf die Detektion eines dritten vordefinierten Musters im Synchronisationssignal (SYNC) das Zählen der Anzahl des Auftretens des zweiten vordefinierten Musters zu initiieren, und in Reaktion auf die Detektion eines ersten vordefinierten Musters ein Umschalten der Konfiguration der ersten Ausleseschaltung (2a) durch die erste Synchronisationsschaltung (7a) zu steuern.

4. Detektionsvorrichtung nach einem der vorherigen Ansprüche, **dadurch gekennzeichnet, dass** die erste Synchronisationsschaltung (7a) dazu konfiguriert ist, in Reaktion auf die Detektion eines vorrangigen Musters im Synchronisationssignal (SYNC) ein Umschalten der Konfiguration der ersten Ausleseschaltung (2a) zu steuern.

5. Detektionsvorrichtung nach Anspruch 4, **dadurch gekennzeichnet, dass** das Umschalten der Konfiguration der ersten Ausleseschaltung (2a) in Reaktion auf die Detektion des vorrangigen Musters dazu konfiguriert ist, die Erfassungsphase zu initiieren oder zu beenden.

6. Detektionsvorrichtung nach Anspruch 1, **dadurch gekennzeichnet, dass** das vierte vordefinierte Muster mit dem zweiten vordefinierten Muster identisch ist, und dass der erste Schwellenwert sich vom zweiten Schwellenwert unterscheidet.

7. Detektionsvorrichtung nach einem der vorherigen Ansprüche, **dadurch gekennzeichnet, dass** die erste Wellenlänge mit der zweiten Wellenlänge identisch ist.

8. Detektionsvorrichtung nach dem vorherigen Anspruch, **dadurch gekennzeichnet, dass** der erste Schwellenwert sich vom zweiten Schwellenwert unterscheidet.

9. Detektionsvorrichtung nach einem der Ansprüche 1 bis 6, **dadurch gekennzeichnet, dass** die erste Wellenlänge sich von der zweiten Wellenlänge unterscheidet.

10. Detektionsvorrichtung nach einem der vorherigen Ansprüche, **dadurch gekennzeichnet, dass** sie umfasst:
- N zusätzliche Fotodetektoren (1N), die für N zusätzliche Wellenlängen empfindlich sind, die sich von der ersten und der zweiten Wellenlänge unterscheiden, wobei N eine Ganzzahl größer oder gleich 1 ist,
- N Ausleseschaltungen (2N), die jeweils mit einem Integrationskondensator versehen sind, wobei die Ausleseschaltung N.ten Ranges (3N) mit dem zusätzlichen Fotodetektor (1N) gekoppelt und dazu konfiguriert ist, mindestens erste und eine zweite Konfigurationen zu definieren, die sich unterscheiden, einschließlich einer Erfassungskonfiguration, bei der elektrische Ladungen, die vom zusätzlichen Fotodetektor N.ten Ranges (1N) ausgegeben werden, im Integrationskondensator N.ten Ranges (3N) gespeichert werden, und einer Rücksetzungskonfiguration des Integrationskondensators N.ten Ranges (3N),
- N Synchronisationsschaltungen (7N), die mit den N Ausleseschaltungen (2N), dem Generator (8) des Synchronisationssignals und dem Generator (9) des Taktsignals verbunden sind, wobei die Synchronisationsschaltung (7N) N.ten Ranges dazu konfiguriert ist:
∘ in Reaktion auf die Detektion eines ersten vordefinierten Musters, das vom Generator (8) des Synchronisationssignals (SYNC) ausgegeben wird, eine Aktion der Synchronisationsschaltung (7N) N.ten Ranges zu steuern, und
∘ eine Anzahl des Auftretens eines zusätzlichen vordefinierten Musters N.ten Ranges im Taktsignal (CLK) zu zählen, und
∘ die Ausleseschaltung (2N) N.ten Ranges von einer Anfangskonfiguration in eine andere Konfiguration umzuschalten, wenn die Anzahl des Auftretens eines zusätzlichen vordefinierten Musters N.ten Ranges im Taktsignal (CLK) gleich einem N.ten Schwellenwert ist, der in einem Register (10) der Synchronisationsschaltung (7N) N.ten Ranges gespeichert ist, wobei die Anfangskonfiguration oder die andere Konfiguration aus der ersten Konfiguration und der zweiten Konfiguration gewählt ist.

11. Detektionsvorrichtung nach einem der vorherigen Ansprüche, **dadurch gekennzeichnet, dass** die erste Ausleseschaltung (2a) dazu konfiguriert ist, die Rücksetzung des ersten Integrationskondensators (3a) durchzuführen, während der erste Fotodetektor (1a) mit dem ersten Integrationskondensator (3a) verbunden ist, und dass die erste Synchronisationsschaltung (7a) dazu konfiguriert ist, die Erfassungsphase durch Beenden der Rücksetzungsphase zu initiieren.

12. Detektionsvorrichtung nach einem der vorherigen Ansprüche, **dadurch gekennzeichnet, dass** das erste vordefinierte Muster eine ansteigende Flanke ist, und dass das dritte vordefinierte Muster eine abfallende Flanke ist.

13. Detektionsvorrichtung nach einem der Ansprüche 1 bis 11, **dadurch gekennzeichnet, dass** das erste vordefinierte Muster eine abfallende Flanke ist, und dass das dritte vordefinierte Muster eine ansteigende Flanke ist.

14. Detektionsvorrichtung nach einem der vorherigen Ansprüche, **dadurch gekennzeichnet, dass** das zweite vordefinierte Muster eine abfallende Flanke oder eine ansteigende Flanke ist.

15. Detektionsvorrichtung nach einem der vorherigen Ansprüche, **dadurch gekennzeichnet, dass** sie eine Vielzahl von ersten Fotodetektoren (1a) umfasst, die mit einer Vielzahl von ersten Ausleseschaltungen (2a) verbunden sind, und eine Vielzahl von zweiten Fotodetektoren (1b), die mit einer Vielzahl von zweiten Ausleseschaltungen (2b) verbunden sind, wobei die Vielzahl von ersten Ausleseschaltungen (2a) mit der ersten Synchronisationsschaltung (7a) verbunden sind.

16. Detektionsvorrichtung nach dem vorherigen Anspruch, **dadurch gekennzeichnet, dass** die die Vielzahl von zweiten Ausleseschaltungen (2b) mit der zweiten Synchronisationsschaltung (7b) verbunden sind.

17. Verfahren zur Steuerung einer Detektionsvorrichtung, **dadurch gekennzeichnet, dass** es die folgenden Schritte umfasst:
- Bereitstellen der Detektionsvorrichtung, umfassend:
∘ einen ersten Fotodetektor (1a) und einen zweiten Fotodetektor (1b), die jeweils für eine erste Wellenlänge und eine zweite Wellenlänge empfindlich sind,
∘ eine erste Ausleseschaltung (2a), die mit einem ersten Integrationskondensator (3a) versehen ist, der mit dem ersten Fotodetektor (1a) gekoppelt und dazu konfiguriert ist, mindestens eine erste und eine zweite Konfiguration zu definieren, die sich unterscheiden, einschließlich einer Erfassungskonfiguration, in der elektrische Ladungen, die vom ersten Fotodetektor (1a) ausgegeben werden, im ersten Integrationskondensator (3a) gespeichert werden, und einer Rücksetzungskonfiguration des ersten Integrationskondensators (3a),
∘ eine zweite Ausleseschaltung (2b), die mit einem zweiten Integrationskondensator (3b) versehen ist, der mit dem zweiten Fotodetektor (1b) gekoppelt und dazu konfiguriert ist, mindestens eine erste und eine zweite Konfiguration zu definieren, die sich unterscheiden, einschließlich einer Erfassungskonfiguration, in der elektrische Ladungen, die vom zweiten Fotodetektor (1b) ausgegeben werden, im zweiten Integrationskondensator (3b) gespeichert werden, und einer Rücksetzungskonfiguration des zweiten Integrationskondensators (3b),
- Detektieren eines ersten vordefinierten Musters in einem Synchronisationssignal, um einen Frame für die erste und die zweite Ausleseschaltung (2a, 2b) zu initiieren,
- Zählen der Anzahl des Auftretens eines zweiten vordefinierten Musters und eines vierten vordefinierten Musters in einem Taktsignal,
- Vergleichen der Anzahl des Auftretens des zweiten vordefinierten Musters mit einem ersten Schwellenwert, wobei die erste Ausleseschaltung eine Rücksetzungsphase des ersten Integrationskondensators (3a) oder eine Datenerfassungsphase initiiert oder beendet, wenn die Anzahl des Auftretens den Schwellenwert erreicht,
- Vergleichen der Anzahl des Auftretens des vierten vordefinierten Musters mit einem zweiten Schwellenwert, wobei die zweite Ausleseschaltung eine Rücksetzungsphase des zweiten Integrationskondensators (3b) oder eine Datenerfassungsphase initiiert oder beendet, wenn die Anzahl des Auftretens den zweiten Schwellenwert erreicht,
wobei sich in diesem Verfahren das zweite vordefinierte Muster vom vierten vordefinierten Muster unterscheidet und/oder der erste Schwellenwert sich vom zweiten Schwellenwert unterscheidet, damit sich die Integrationszeit des ersten Fotodetektors (1a) im Frame von der Integrationszeit des zweiten Fotodetektors (1b) unterscheidet.

## Claims

1. Detection device comprising:
- a first photodetector (1a) and a second photodetector (1b) respectively sensitive to a first wavelength and a second wavelength second wavelength,
- a first readout circuit (2a) provided with a first integration capacitor (3a) coupled to the first photodetector (1a) and configured to define at least first and second different configurations including an acquisition configuration in which electrical charges emitted by the first photodetector (1a) are stored in the first integration capacitor (3a) and a reset configuration of the first integration capacitor (3a),
- a second readout circuit (2b) with a second integration capacitor (3b) coupled to the second photodetector (1b) and configured to define at least first and second different configurations including an acquisition configuration where electrical charges emitted by the second photodetector (1b) are stored in the second integration capacitor (3b) and a reset configuration of the second integration capacitor (3b),
- a generator (8) of synchronization signal (SYNC) defining at least one frame,
- a generator (9) of clock signal (CLK),
- a first synchronization circuit (7a) connected to the first readout circuit (2a), to the generator (8) of synchronization signal (SYNC) and to the generator (9) of clock signal (CLK),the first synchronization circuit (7a) being configured to
∘ control an action of the first synchronization circuit (7a) in response to the detection of a first predefined pattern emitted by the generator (8) of synchronization signal (SYNC), the action being selected from an acquisition phase start, an acquisition phase stop and a reset phase, and
∘ counting a number of occurrences of a second predefined pattern in the clock signal (CLK) and
∘ switching the first readout circuit (2a) from an initial configuration to another configuration when the number of occurrences of the second predefined pattern is equal to a first threshold value stored in a register (10) of the first synchronization circuit (7a), the initial configuration or the other configuration being chosen at least from the first configuration and the second configuration,
- a second synchronization circuit (7b) connected to the second readout circuit (2b), to the generator (8) of synchronization signal and to the generator (9) of clock signal, the second synchronization circuit (7b) being configured to :
∘ control an action of the second synchronization circuit (7b) in response to detection of the first predefined pattern emitted by the generator (8) of synchronization signal (SYNC), the action being chosen from a start of the acquisition phase, a stop of the acquisition phase and a reset phase,
∘ counting a number of occurrences of a fourth predefined pattern in the clock signal (CLK) and
∘ switching the second readout circuit (2b) from an initial configuration to another configuration when the number of occurrences of a fourth predefined pattern in the clock signal (CLK) is equal to a second threshold value stored in a register (10) of the second synchronization circuit (7b), the initial configuration or the other configuration being chosen from the first configuration and the second configuration,
and wherein the second predefined pattern is different from the fourth predefined pattern and/or the first threshold value is different from the second threshold value so that the integration time of the first photodetector (1a) is different from the integration time of the second photodetector (1b) in a frame.

2. Detection device according to claim 1, **characterized in that** the first synchronization circuit (7a) is configured to initiate counting of the number of occurrences of the second predefined pattern in response to detection of the first predefined pattern in the synchronization signal (SYNC).

3. Detection device according to claim 1, **characterized in that** the first synchronization circuit (7a) is configured to initiate the counting of the number of occurrences of the second predefined pattern in response to the detection of a third predefined pattern in the synchronization signal (SYNC) and to control a switching of configuration of the first readout circuit (2a) by means of the first synchronization circuit (7a) in response to the detection of a first predefined pattern

4. Detection device according to any of the preceding claims, **characterized in that** the first synchronization circuit (7a) is configured to control a switching of configuration of the first readout circuit (2a) in response to the detection of a priority pattern in the synchronization signal (SYNC).

5. Detection device according to claim 4, **characterized in that** the switching of configuration of the first readout circuit (2a) in response to the detection of the priority pattern is configured to initiate or terminate the acquisition phase.

6. Detection device according to claim 1, **characterized in that** the fourth predefined pattern is identical to the second predefined pattern and **in that** the first threshold value is different from the second threshold value.

7. Detection device according to one of the preceding claims, **characterized in that** the first wavelength is identical to the second wavelength.

8. Detection device according to the preceding claim, **characterized in that** the first threshold value is different from the second threshold value.

9. Detection device according to any one of claims 1 to 6, **characterized in that** the first wavelength is different from the second wavelength.

10. Detection device according to any one of the preceding claims, **characterized in that** it comprises:
- N additional photodetectors (1N) sensitive to N additional wavelengths different from the first and second wavelengths, with N an integer greater than or equal to 1,
- N readout circuits (2N) each provided with an integration capacitor, the Nth rank readout circuit (3N) being coupled to the additional photodetector (1N) and configured to define at least first and second different configurations including an acquisition configuration where electrical charges emitted by the N-rank additional photodetector (1N) are stored in the N-rank integration capacitor (3N) and a reset configuration of the N-rank integration capacitor (3N),
- N synchronization circuits (7N) connected to the N readout circuits (2N), to the generator (8) of synchronization signal and to the generator (9) of clock signal, the N-rank synchronization circuit (7N) being configured so as to :
∘ control an action of the N-rank synchronization circuit (7N) in response to the detection of a first predefined pattern emitted by the generator (8) of synchronization signal (SYNC), and
∘ count a number of occurrences of a N-rank additional predefined pattern in the clock signal (CLK) and
∘ toggle the N-rank readout circuit (2N) from an initial configuration to another configuration when the number of occurrences of a predefined N-rank additional pattern in the clock signal (CLK) is equal to an N-rank threshold value stored in a register (10) of the N-rank synchronization circuit (7N), the initial configuration or the other configuration being chosen from the first configuration and the second configuration.

11. Detection device according to any one of the preceding claims, **characterized in that** the first readout circuit (2a) is configured to carry out the resetting of the first integration capacitor (3a) while the first photodetector (1a) is connected to the first integration capacitor (3a) and **in that** the first synchronization circuit (7a) is configured so as to initiate the acquisition phase by stopping the resetting phase.

12. Detection device according to any of the preceding claims, **characterized in that** the first predefined pattern is a rising edge and **in that** the third predefined pattern is a falling edge.

13. Detection device according to any one of claims 1 to 11, **characterized in that** the first predefined pattern is a falling edge and **in that** the third predefined pattern is a rising edge.

14. Detection device according to any of the preceding claims, **characterized in that** the second predefined pattern is a falling edge or a rising edge.

15. Detection device according to any of the preceding claims, **characterized in that** it comprises a plurality of first photodetectors (1a) connected to a plurality of first readout circuits (2a) and a plurality of second photodetectors (1b) connected to a plurality of second readout circuits (2b), the plurality of first readout circuits (2a) is connected to the first synchronization circuit (7a).

16. Detection device according to the preceding claim, **characterized in that** the plurality of second readout circuits (2b) is connected to the second synchronization circuit (7b).

17. Method for managing a detection device, **characterized in that** it comprises the following steps:
- providing the detection device comprising:
∘ a first photodetector (1a) and a second photodetector (1b) respectively sensitive to a first wavelength and a second wavelength,
∘ a first readout circuit (2a) provided with a first integration capacitor (3a) coupled to the first photodetector (1a) and configured to define at least first and second different configurations comprising an acquisition configuration in which electrical charges emitted by the first photodetector (1a) are stored in the first integration capacitor (3a) and a reset configuration of the first integration capacitor (3a),
∘ a second readout circuit (2b) provided with a second integration capacitor (3b) coupled to the second photodetector (1b) and configured to define at least first and second different configurations including an acquisition configuration where electrical charges emitted by the second photodetector (1b) are stored in the second integration capacitor (3b) and a reset configuration of the second integration capacitor (3b),
- detecting a first predefined pattern in a clock signal to initiate a frame for the first and second readout circuits (2a, 2b),
- counting the number of occurrences of a second predefined pattern and the fourth predefined pattern in a clock signal,
- comparing said number of occurrences of the second predefined pattern with a first threshold value, when the number of occurrences reaches the threshold value, the first readout circuit initiates or stops a phase of resetting the first integration capacitor (3a) or a phase of data acquisition,
- comparing said number of occurrences of the fourth predefined pattern with a second threshold value, when the number of occurrences reaches the second threshold value, the second readout circuit initiates or stops a phase of resetting the second integration capacitor (3b) or a data acquisition phase,
method wherein the second predefined pattern is different from the fourth predefined pattern and/or the first threshold value is different from the second threshold value so that the integration duration of the first photodetector (1a) is different from the integration duration of the second photodetector (1b) in the frame.
